# EUROPÄISCHE PATENTSCHRIFT

(11) **EP 2 029 303 B1**
(45) Veröffentlichungstag und Bekanntmachung des Hinweises auf die Patenterteilung: **23.06.2010**
(21) Anmeldenummer: 07727821.6
(22) Anmeldetag: 05.04.2007
(51) Int. Cl.: B23D 49/16, B23D 51/10

(54) **HUBSÄGE MIT EINER BEFESTIGUNGSEINRICHTUNG FÜR EIN SÄGEBLATT**
RECIPROCATING SAW WITH A FASTENING DEVICE FOR A SAW BLADE
SCIE SAUTEUSE MUNIE D' UN DISPOSITIF DE FIXATION POUR UNE LAME DE SCIE

(30) Priorität: 31.05.2006 DE 102006025768
(43) Veröffentlichungstag der Anmeldung: 04.03.2009
(73) Patentinhaber: Robert Bosch GmbH, 70442 Stuttgart (DE)
(72) Erfinder: RAKACZKI, Janos, 3521 Miskolc (HU)
(86) Internationale Anmeldenummer: PCT/EP2007/053353
(87) Internationale Veröffentlichungsnummer: WO 2007/137900

(56) Entgegenhaltungen:
- DE-A1-102004 042 026

## Beschreibung

Die Erfindung bezieht sich auf eine Hubsäge mit einer Befestigungseinrichtung für ein Sägeblatt nach dem Oberbegriff des Anspruches 1.

In der DE 32 47 178 C2 wird eine handgeführte Stichsäge beschrieben, deren Sägeblatt über eine Befestigungseinrichtung lösbar mit einer motorisch betätigten Hubstange verbunden ist. Die Befestigungseinrichtung umfasst einen Rotationskörper, der mit der Hubstange verbunden ist, sowie eine Verriegelungshülse, die auf den Rotationskörper aufschraubbar ist und über die die Stichsäge an der Hubstange gehalten ist. Hierfür weist die Verriegelungshülse eine stirnseitige Durchlassöffnung auf, in die der Schaft des Sägeblattes einragt, wobei in der Befestigungsposition mit dem Verschrauben der Verriegelungshülse auf einem Außengewinde des Rotationskörpers Noppen, die sich am Schaft des Sägeblattes erheben, in zugeordnete Vertiefungen am Rotationskörper eingedrückt werden, wodurch eine formschlüssige Verriegelung erreicht wird.

Um einen Werkzeugwechsel durchzuführen, muss die Verriegelungshülse von dem Rotationskörper abgeschraubt werden. Auch ist es nicht auszuschließen, dass aufgrund der Vibrationen im laufenden Betrieb der Stichsäge die Verriegelungshülse sich versehentlich selbsttätig löst.

Aus der DE 10 2004 042 026 A1 ist eine Hubsäge mit einer motorisch angetriebenen, hin- und her beweglichen Hubstange bekannt, die an ihrem freien Ende eine Befestigungseinrichtung für ein Sägeblatt trägt, wobei das Sägeblatt drehfest in der Befestigungseinrichtung gehalten ist. Zur axialen Fixierung des Sägeblattes in der Befestigungseinrichtung ist ein in Richtung des Sägeblattes von einer Verstellfeder beaufschlagtes, zwischen einer Freigabeposition und einer Fixierposition verstellbares Arretierelement vorgesehen, das das Sägeblatt in der Fixierposition formschlüssig hält. Über zwei zusammenwirkende Hülsen, von denen eine als Drehhülse und die zweite als Schiebehülse ausgebildet ist, wird das Arretierelement entgegen der Federkraft der Verstellfeder in seiner Freigabeposition verschoben. Hierbei wird vom Benutzer die Drehhülse verdreht, woraufhin über eine kinematische Kopplung die Schiebehülse axial verschoben und das als Arretierstift ausgeführte Arretierelement in die Freigabeposition verstellt wird.

### Offenbarung der Erfindung

Der Erfindung liegt die Aufgabe zugrunde, eine Hubsäge anzugeben, deren Sägeblatt sicher zu fixierten und schnell auswechselbar ist. Die Hubsäge soll insbesondere eine klein bauende Befestigungseinrichtung zur Fixierung des Sägeblattes an einer beweglichen Hubstange der Hubsäge aufweisen.

### Technische Lösung

Diese Aufgabe wird erfindungsgemäß mit den Merkmalen des Anspruches 1 gelöst.
Die Unteransprüche geben zweckmäßige Weiterbildungen an.

Der Löseeinrichtung ist auf der Außenseite des Gehäuses ein Löseschalter zugeordnet, außerdem weist die Löseeinrichtung einen mit dem Löseschalter verbundenen Schaltflansch auf, der im Inneren des Gehäuses angeordnet ist, wobei dieser Schaltflansch das Arretierelement beaufschlagt. Der Kontaktpunkt zwischen dem Schaltflansch und dem Arretierelement liegt auf Abstand zur Bewegungsebene des Löseschalters. In dieser Ausführung wird eine räumliche Entzerrung zwischen dem unmittelbar auf das Arretierelement wirkenden Bauteil der Löseeinrichtung und dem Löseschalter erreicht, der von der Bedienperson zu betätigen ist, wodurch insgesamt zusätzliche konstruktive Freiheiten bei der Gestaltung der Hubsäge gegeben sind. Auch in dieser Ausführung ist eine Raum sparende Bauweise möglich, insbesondere bezogen auf den Bauraum im Inneren des Gehäuses der Befestigungseinrichtung mit dem darin befindlichen Schaltflansch und dem Arretierelement zur Fixierung des Sägeblatts. Aufgrund des Abstandes zwischen dem Kontaktpunkt - bzw. der Wirklinie oder Bewegungsrichtung des Arretierelements - zwischen Schaltflansch und Arretierelement einerseits und der Bewegungsebene des Löseschalters andererseits können beispielsweise Ausführungen realisiert werden, bei denen der Löseschalter auf der Unterseite des Befestigungsgehäuses - benachbart zu den Sägezähnen des Sägeblattes - angeordnet ist. In dieser Ausführung kann der Löseschalter so positioniert werden, dass er nicht über die Seitenwände des Befesfigungsgehäuses übersteht, so dass in Querrichtung eine klein bauende Vorrichtung erreicht wird.

In einer zweckmäßigen Weiterbildung ist vorgesehen, dass der Löseschalter der Schalteinrichtung auf der Außenseite bündig in das Gehäuse der Befestigungseinrichtung integriert ist. Dies hat den Vorteil, dass zumindest bei nicht betätigtem Löseschalter dieser nicht über die Außenseite der Gehäusewandung übersteht und somit auch kein Hindernis bilden kann. Erreicht wird dies insbesondere über eine Ausführung des Löseschalters als Schiebeschalter, der in eine Nut im Gehäuse eingesetzt und in dieser Nut verschieblich geführt wird.

In einer weiteren vorteilhaften Ausführung sind Löseschalter und Schaltflansch, der unmittelbar das Arretierelement beaufschlagt, einstückig ausgebildet. Ist beispielsweise der Löseschalter auf der Unterseite des Befestigungsgehäuses angeordnet, so erstreckt sich der Schaltflansch zumindest über einen Teilabschnitt senkrecht zu der Bewegungsebene des Löseschalters zur Überbrückung der Distanz zwischen Löseschalter und Kontaktpunkt zum Arretierelement.

In einer weiteren bevorzugten Ausführung ist ein separates Federelement vorgesehen, das der Löseeinrichtung zugeordnet ist und diese in ihre Funktionsstellung kraftbeaufschlagt. Die Funktionsstellung ist hierbei gleichbedeutend mit der Arretier- bzw. Fixierposition, in der das Arretierelement das Sägeblatt formschlüssig an einem Bauteil der Hubsäge, insbesondere an der Hubstange fixiert ist. Dieses zusätzliche Federelement, welches auf die Löseeinrichtung einwirkt, stellt eine ergänzende Sicherung dar, um ein versehentliches Lösen des Sägeblattes aus der Befestigungseinrichtung zu verhindern. Es sind somit insgesamt zwei Federelemente vorhanden, die unmittelbar oder mittelbar das Arretierelement in der Arretierposition halten. Auch bei Funktionsuntüchtigkeit eines der Federelemente wird das Arretierelement durch die Federkraft des verbleibenden, intakten Federelementes in der Arretierposition gehalten. Das zweite Federelement, das der Lösereinrichtung zugeordnet ist, ist beispielhaft als Blattfeder ausgebildet; in Frage kommen aber auch andere Federausführungen, beispielsweise Spiralfedern.

In noch einer weiteren, vorteilhaften Ausführung sind das Federelement der Löseeinrichtung und das Arretierelement auf gegenüberliegenden Seiten des Sägeblattes angeordnet, wodurch der vorhandene Bauraum im Inneren des Befestigungsgehäuses auf der dem Arretierelement gegenüberliegenden Seite ausgenutzt wird. Hierfür untergreift ein Abschnitt der Löseeinrichtung - entweder des Schaltflansches oder des Löseschalters - das Sägeblatt.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung einer als Handwerkzeugmaschine ausgebildeten Stichsäge,
- Fig. 2: eine perspektivische Darstellung der erfindungsgemäßen Befestigungseinrichtung zur Verbindung der motorbetätigten Hubstange mit dem Stichsägeblatt,
- Fig. 3: die Bauteile der erfindungsgemäßen Befestigungseinrichtung einschließlich Hubstange und Sägeblatt in Explosionsdarstellung,
- Fig. 4: eine Befestigungseinrichtung in Explosionsdarstellung in einer alternativen Ausführung,
- Fig. 5: einen Ausschnitt aus einer Handwerkzeugmaschine mit einer Befestigungseinrichtung nach Fig. 4.

### Ausführungsform(en) der Erfindung

In den Figuren sind gleiche Bauteile mit gleichen Bezugszeichen versehen.

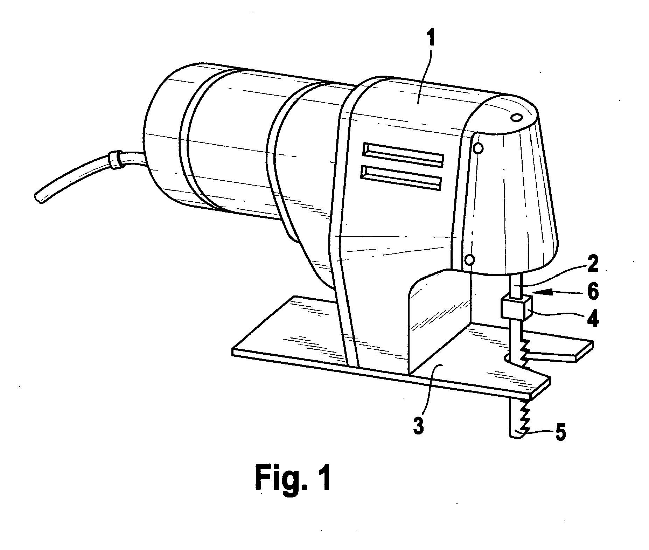

Die in Fig. 1 dargestellte, als Handwerkzeugmaschine ausgebildete, elektrische Stichsäge 1 weist eine elektromotorisch betätigte Hubstange 2 auf, an der über eine Befestigungseinrichtung 4 axial anschließend ein Stichsägeblatt 5 fixiert ist, das in einer Ausbuchtung einer Grundplatte geführt ist, welche einen Gleitschuh 3 bildet. Die Hubstange 2 und das Stichsägeblatt 5 stoßen axial aneinander bzw. überlappen sich axial geringfügig und sind über die Befestigungseinrichtung 4 lösbar miteinander verbunden. Für einen Wechsel des Sägeblatts 5 wird die Befestigungseinrichtung 4 gelöst, nach dem Austauschen des Sägeblatts wird die Befestigungseinrichtung mit dem neuen Sägeblatt wieder in die Arretierposition verstellt. Das Hubstangenende 6 ragt in das Befestigungsgehäuse der Befestigungseinrichtung 4 ein, ebenso das zugewandte stirnseitige Ende des Sägeblatts 5.

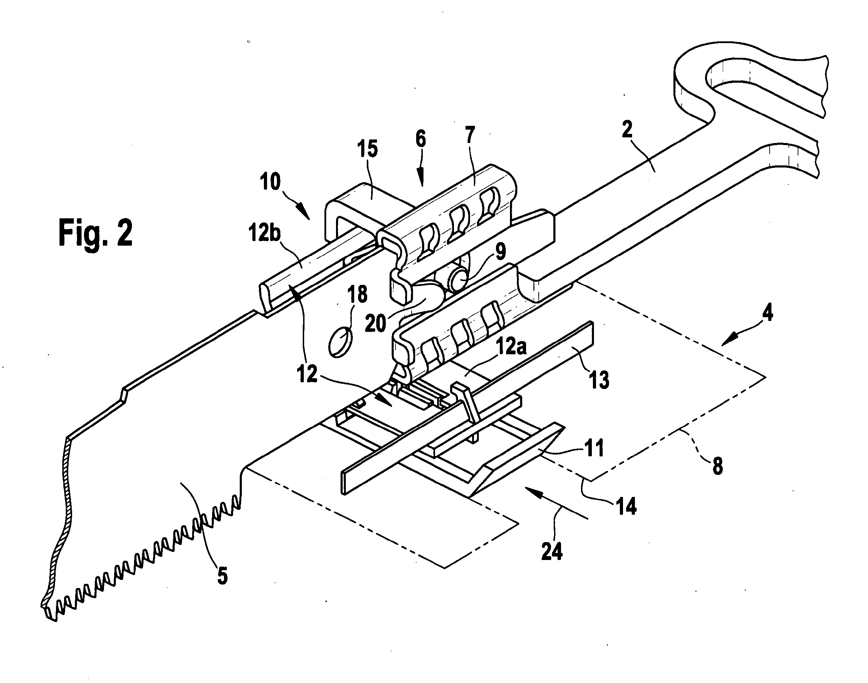

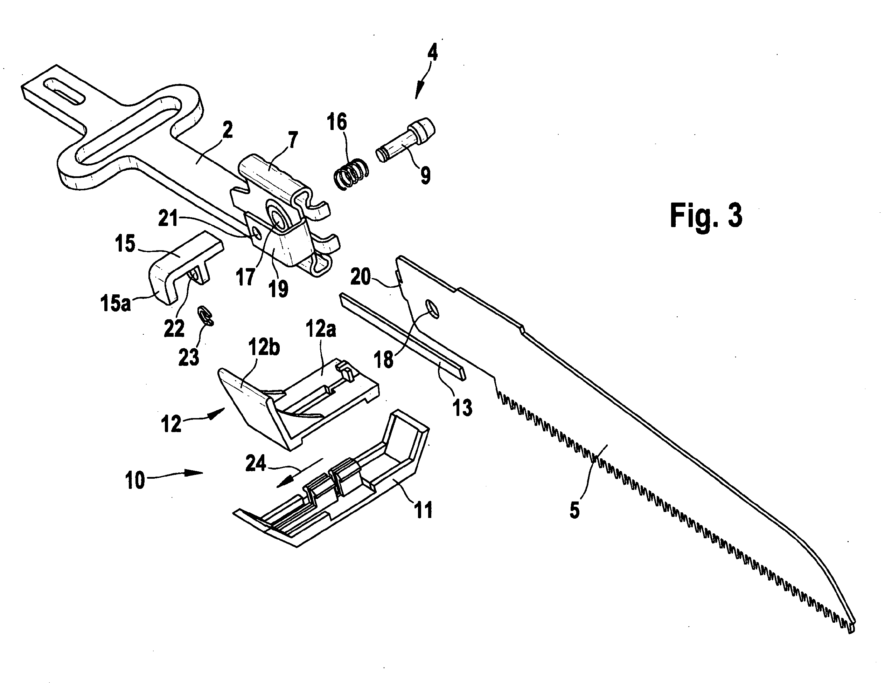

In den Fig. 2 und 3 ist die Befestigungseinrichtung 4 zur lösbaren Befestigung des Sägeblatts 5 an der Hubstange 2 im Detail dargestellt. Am Hubstangenende 6 ist ein Einsatzteil 7 aus Metall befestigt, insbesondere angeschweißt, welches C-förmig bzw. klammerförmig ausgebildet ist und eine Aufnahme für den axialen Schaft des Sägeblattes 5 bildet. Der Schaft des Sägeblatts 5 ist in die Aufnahme im Einsatzteil 7 so weit einschiebbar, dass eine Öffnung 18 in diesem Abschnitt des Sägeblatts in eine Flucht mit einer zugeordneten Öffnung 17 (Fig. 3) in dem Einsatzteil 7 gelangt. Für ein erleichtertes axiales Einschieben des Sägeblatts 5 in die Aufnahme im Einsatzteil 7 ist stirnseitig am Sägeblatt eine Anlaufschräge 20 ausgebildet, die beim Einführen in die Aufnahme ein federbelastetes Arretierelement 9 aus der Fixier- bzw. Arretierposition in die Freigabeposition wegdrückt. Dieses Arretierelement 9 ragt durch beide Öffnungen 17 und 18 im Einsatzteil 7 bzw. im Sägeblatt 5, sobald diese Öffnungen miteinander fluchten, und sichert hierdurch das Sägeblatt 5 axial an der Hubstange 2. Dieses Arretierelement 9 ist, wie Fig. 3 zu entnehmen, als axial verstellbarer Arretierstift ausgebildet und wird von einer Verstellfeder 16 in die Fixierposition federkraftbeaufschlagt. In der Fixierposition ist das Sägeblatt 5 formschlüssig an der Hubstange 2 gesichert.

Um das Sägeblatt 5 aus der Fixierposition lösen zu können, muss das Arretierelement 9 aus der Fixierposition in die Freigabeposition verstellt werden. Hierzu muss das Arretierelement 9 entgegen der Kraft der Verstellfeder 16 axial zurückgeschoben werden, was mithilfe einer Löseeinrichtung 10 durchgeführt wird. Das Arretierelement 9 ist quer zur Sägeblattebene verschieblich gelagert und in Querrichtung kraftbeaufschlagt.

Die Löseeinrichtung 10 umfasst einen Löseschalter 11, einen Schaltflansch 12 sowie ein Verbindungsteil 15. Der Löseschalter 11 befindet sich unterhalb des Sägeblatts 5 auf der Außenseite des Befestigungsgehäuses 8, in welchem alle Bauteile zur Fixierung und zum Lösen des Sägeblatts untergebracht sind. Der Löseschalter 11 ist in Querrichtung in einer Führungsnut 14, die in das Befestigungsgehäuse 8 eingebracht ist, verschieblich gelagert. Formschlüssig mit dem Löseschalter 11 ist der Schaltflansch 12 verbunden, der einen horizontalen Abschnitt 12a unter dem Sägeblatt 5 aufweist und der parallel zu dem Löseschalter 11 liegt und formschlüssig mit dem Löseschalter 11 verbunden ist. Der Schaltflansch 12 weist senkrecht zu dem Abschnitt 12a einen weiteren, achsparallel zur Ebene des Sägeblatts 5 verlaufenden Abschnitt 12b auf. Der Abschnitt 12a liegt ebenso wie der Löseschalter 11 unter dem Sägeblatt 5, wohingegen der Abschnitt 12b sich entlang einer Seitenfläche des Sägenblattes 5 erstreckt.

Der Löseeinrichtung 10 ist außerdem ein Federelement 13 zugeordnet, welches am Befestigungsgehäuse 8 fixiert ist und am Abschnitt 12a des Schaltflansches 12 gehalten ist und die Löseeinrichtung in ihre Funktionsposition kraftbeaufschlagt, die zugleich der Fixierposition des Arretierelementes 9 entspricht.

Das Verbindungsteil 15 verbindet den Schaltflansch 12 der Löseeinrichtung mit dem Arretierelement 9. Hierfür ist das Verbindungselement 15 an einem Befestigungsflansch 19 gehalten, der einstückig am Einsatzteil 7 ausgebildet ist. Eine Stirnseite des Arretierelementes 9 durchragt in zusammengebauter Position eine Bohrung 21, die in den Befestigungsflansch 19 eingebracht ist, sowie eine weitere Ausnehmung 22 im Verbindungsteil 15. Die Verstellfeder 16 ist als Spiralfeder ausgeführt und befindet sich in zusammengebauter Position zwischen dem Befestigungsflansch 19 und der zugewandten Seitenwand des Einsatzteils 7. Das stirnseitige Ende des Arretierelementes 9 durchragt die Öffnungen 17 und 18 im Einsatzteil 7 bzw. dem Sägeblatt 5 und außerdem die Öffnung 21 im Befestigungsflansch 19 sowie die Ausnehmung 22 im Verbindungsteil 15. Zur Sicherung ist ein Seegerring 23 vorgesehen, der das die Ausnehmungen 22 im Verbindungsflansch 15 durchragende Ende des Arretierelementes 9 vor unerwünschtem Herausrutschen sichert.

Das Verbindungsteil 15 weist eine nach unten in Richtung Schaltflansch 12 ragende Schulter 15a auf, die in Zusammenbauposition den zugeordneten Abschnitt 12a des Schaltflansches hintergreift. Dadurch kann in Querrichtung, also in Richtung quer zur Ebene des Sägeblattes 5, bei einer Verschiebebewegung von Löseschalter 11 und Schaltflansch 12 in Pfeilrichtung 24 das Verbindungselement 15 sowohl gegen die Kraft der Verstellfeder 16 als auch der Kraft des Federelementes 13 verstellt werden, wobei aufgrund der Sicherung des stiftförmigen Arretierelementes 9 mithilfe des Seegerrings 23 am Verbindungsteil 15 auch das Arretierelement 9 in Pfeilrichtung 24 verschoben wird und hierdurch von der Fixierposition in die Freigabeposition überführt wird, in der das Arretierelement 9 in Außereingriff mit den Öffnungen 17 und 18 liegt. In der Freigabeposition kann dann das Sägeblatt 5 axial aus der Aufnahme im Einsatzteil 7 herausgenommen werden.

Sobald der Löseschalter 11 nicht länger manuell in Pfeilrichtung 14 verschoben wird, stellt sich die gesamte Loseeinrichtung unter der Kraftwirkung der Federn 16 und 13 in ihre Ausgangsposition entgegen der Pfeilrichtung 24 zurück, und zwar ungeachtet dessen, ob bereits wieder ein Sägeblatt 5 eingeführt worden ist oder nicht. Sofern noch kein Sägeblatt 5 eingeführt worden ist, durchragt das Arretierelement 9 lediglich die Öffnung 17 im Einsatzteils 7. Sobald ein neues Sägeblatt 5 axial in die Aufnahme im Einsatzteil 7 eingeschoben wird, gelangt die Anlaufschräge 20 dieses Sägeblattes in Kontakt mit der Stirnseite des Arretierelementes und drückt dieses gegen die Federkraft so weit zurück, dass das Sägeblatt weiter axial eingeschoben werden kann, bis die Öffnung 18 im Sägeblatt in Überdeckung mit der Öffnung 17 im Einsatzteil 7 gelangt und das Arretierelement 9 wieder seine Fixierposition einnehmen kann.

Vorteilhaft an dieser Ausführung ist, dass der Abschnitt 12b des Schaltflansches 12 auf der gleichen Seite des Sägeblatts angeordnet ist wie das Arretierelement 9 und das Verbindungsteil 15. In der in Fig. 2 dargestellten Fixierposition liegt der größte Teil des Arretierelementes 9 auf der dem Betrachter abgewandten Seite; es ragt lediglich die Stirnseite des Arretierelementes durch die Öffnung im Einsatzteil 7 hindurch. Die übrigen Bauteile der Löseeinrichtung befinden sich dagegen im Wesentlichen unterhalb des Sägeblattes 5, wie Fig. 2 zu entnehmen ist. Es sind dies der Abschnitt 12a und der Löseschalter 11, zu dem der Abschnitt 12a etwa parallel angeordnet ist. Lediglich das Federelement 13, das die Löseeinrichtung 10 in die Funktionsposition kraftbeaufschlagt, liegt auf der gegenüberliegenden Seite.

Vorteilhaft ist außerdem, dass der Kontaktpunkt bzw. die Kraft- und Wirklinie zwischen dem Abschnitt 12b des Schaltflansches 12 und dem Arretierelement 9, die aufgrund des zwischenliegenden Verbindungsteils 15 mit der Achse des Arretierelementes 9 zusammenfällt, auf Abstand zur Bewegungsebene des Löseschalters 11 liegt. Der Löseschalter 11 befindet sich unterhalb des Sägeblattes 5, das Arretierelement 9 dagegen etwa in der Mitte des Sägeblattes 5, bezogen auf die Höhe des Sägeblattes. Die Höhendifferenz zwischen der Bewegungsebene des Löseschalters 11 und der Verstellrichtung des Arretierelementes 9 wird mithilfe des Abschnittes 12b des Schaltflansches überbrückt.

Der Löseschalter 11 ist in der Führungsnut 14 im Befestigungsgehäuse 8 in Querrichtung verschieblich geführt und insbesondere bündig in die Außenwandung des Befestigungsgehäuses eingelassen, so dass keine Abschnitte des Löseschalters 11 über die Außenwandung des Befestigungsgehäuses überstehen.

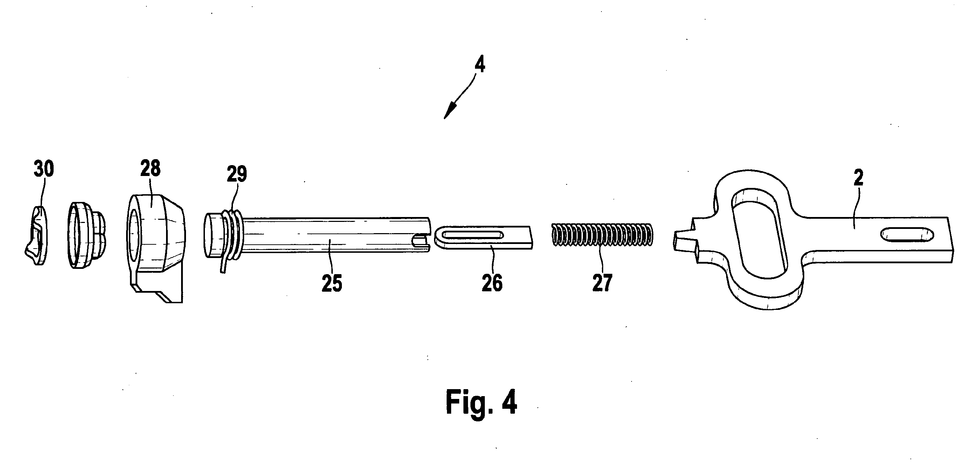

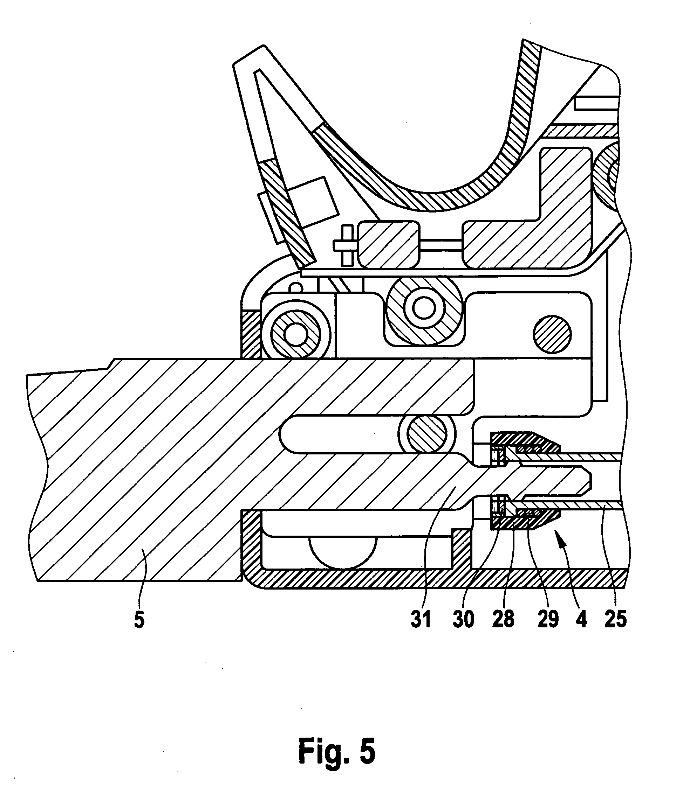

In den Fig. 4 und 5 ist ein weiteres Ausführungsbeispiel dargestellt. Die Befestigungseinrichtung 4 besteht aus einer Aufnahmehülse 25, die axial einenends auf einen Fortsatz an der Hubstange 2 aufgesetzt wird, wobei anderenends ein Schaft 31 (Fig. 5) axial in die Aufnahmehülse 25 eingeschoben wird. Dieses Einschieben des Schaftes 31 erfolgt axial gegen die Federkraft eines Federelementes 27, welches gemeinsam mit einem Blechteil 26 im Inneren der Aufnahmehülse 25 geführt ist. Zur axialen Sicherung des Stichsägeblattes 5 ist ein drehbares Verriegelungselement 28 vorgesehen, das von einer auf dem Außenmantel der Aufnahmehülse 25 aufsitzenden Drehfeder 29 in seine Verriegelungsposition kraftbeaufschlagt ist. Über ein weiteres Klemmteil 30 wird der Schaft 31 des Sägeblattes 5 gesichert.

Zum Lösen des Sägeblattes muss das Verriegelungselement 28 gegen die Kraft der Drehfeder 29 zurückverschwenkt werden, woraufhin der Schaft 31 freigegeben wird und das Sägeblatt axial entnommen werden kann.

## Patentansprüche

1. Hubsäge mit einer motorisch angetriebenen, hin und her beweglichen Hubstange (2), die an ihrem freien Ende (6) eine Befestigungseinrichtung (4) für ein Sägeblatt (5) trägt, wobei das Sägeblatt (5) drehfest in der Befestigungseinrichtung (4) gehalten ist, wobei zur axialen Fixierung des Sägeblattes (5) in der Befestigungseinrichtung (4) ein in Richtung des Sägeblattes (5) von einer Verstellfeder (16) beaufschlagtes, zwischen einer Freigabeposition und einer Fixierposition verstellbares Arretierelement (9) vorgesehen ist, das das Sägeblatt (5) in der Fixierposition formschlüssig hält, und dass eine Löseeinrichtung (10) vorgesehen ist, mit der das Arretierelement (9) entgegen der Federkraft der Verstellfeder (16) in seine Freigabeposition verschiebbar ist, **dadurch gekennzeichnet, dass** ein Löseschalter (11) der Löseeinrichtung (10) auf der Außenseite des Gehäuses (8) der Befestigungseinrichtung (4) angeordnet ist und die Löseeinrichtung (10) einen mit dem Löseschalter (11) verbundenen Schaltflansch (12) im Gehäuse (8) aufweist, wobei der Schaltflansch (12) das Arretierelement (9) beaufschlagt und der Kontaktpunkt zwischen Schaltflansch (12) und Arretierelement (9) auf Abstand zur Bewegungsebene des Löseschalters (11) liegt.

2. Hubsäge nach Anspruch 1, **dadurch gekennzeichnet, dass** der Löseschalter (11) der Löseeinrichtung (10) auf der Außenseite bündig in das Gehäuse (8) integriert ist.

3. Hubsäge nach Anspruch 1 oder 2, **dadurch gekennzeichnet, dass** der Löseschalter (11) als Schiebeschalter ausgeführt und in einer Führungsnut (14) im Gehäuse (8) verschieblich geführt ist.

4. Hubsäge nach einem der Ansprüche 1 bis 3, **dadurch gekennzeichnet, dass** Löseschalter (11) und Schaltflansch (12) formschlüssig miteinander verbunden sind.

5. Hubsäge nach einem der Ansprüche 1 bis 4, **dadurch gekennzeichnet, dass** die Löseeinrichtung (10) von einem separaten Federelement (13) in ihre Funktionsstellung beaufschlagt ist.

6. Hubsäge nach Anspruch 5, **dadurch gekennzeichnet, dass** das Federelement (13) als Blattfeder ausgebildet ist.

7. Hubsäge nach Anspruch 5 oder 6, **dadurch gekennzeichnet, dass** das Federelement (13) und das das Arretierelement (9) beaufschlagende Bauteil (12) der Löseeinrichtung (10) auf gegenüberliegenden Seiten des Sägeblattes (5) angeordnet sind.

8. Hubsäge nach einem der Ansprüche 1 bis 7, **dadurch gekennzeichnet, dass** an der Hubstange (2) ein klammerförmiges Einsatzteil (7) befestigt ist, das eine Aufnahme für das Sägeblatt (5) bildet, wobei an dem Einsatzteil (7) das Arretierelement (9) verstellbar gehalten ist.

9. Hubsäge nach Anspruch 8, **dadurch gekennzeichnet, dass** an dem Einsatzteil (7) ein Befestigungsflansch (19) ausgebildet ist, an dem sich die Verstellfeder (16) abstützt.

10. Hubsäge nach Anspruch 9, **dadurch gekennzeichnet, dass** an dem Befestigungsflansch (19) das Arretierelement (9) geführt ist.

## Claims

1. Reciprocating saw having a motor-driven stroke rod (2) which is movable in a reciprocating manner and carries at its free end (6) a fastening device (4) for a saw blade (5), wherein the saw blade (5) is held in the fastening device (4) in a rotationally fixed manner, wherein a locking element (9) acted upon by an adjusting spring (16) in the direction of the saw blade (5) and adjustable between a release position and a fixing position is provided for axially fixing the saw blade (5) in the fastening device (4), said locking element (9) holding the saw blade (5) in the fixing position in a positive-locking manner, and wherein a release device (10) is provided, with which the locking element (9) can be displaced into its release position against the spring force of the adjusting spring (16), **characterized in that** a release switch (11) of the release device (10) is arranged on the outer side of the housing (8) of the fastening device (4), and the release device (10) has a switching flange (12), connected to the release switch (11), in the housing (8), wherein the switching flange (12) acts upon the locking element (9), and the contact point between switching flange (12) and locking element (9) is at a distance from the motion plane of the release switch (11).

2. Reciprocating saw according to Claim 1, **characterized in that** the release switch (11) of the release device (10) is integrated into the housing (8) in a flush manner on the outer side.

3. Reciprocating saw according to Claim 1 or 2, **characterized in that** the release switch (11) is designed as a sliding switch and is displaceably guided in a guide groove (14) in the housing (8).

4. Reciprocating saw according to one of Claims 1 to 3, **characterized in that** the release switch (11) and the switching flange (12) are connected to one another in a positive-locking manner.

5. Reciprocating saw according to one of Claims 1 to 4, **characterized in that** the release device (10) is moved into its operating position by being acted upon by a separate spring element (13).

6. Reciprocating saw according to Claim 5, **characterized in that** the spring element (13) is designed as a leaf spring.

7. Reciprocating saw according to Claim 5 or 6, **characterized in that** the spring element (13) and the component (12) of the release device (10) that acts upon the locking element (9) are arranged on opposite sides of the saw blade (5).

8. Reciprocating saw according to one of Claims 1 to 7, **characterized in that** a clip-like insert (7) is fastened to the stroke rod (2) and forms a receptacle for the saw blade (5), wherein the locking element (9) is adjustably held on the insert (7).

9. Reciprocating saw according to Claim 8, **characterized in that** a fastening flange (19) on which the adjusting spring (16) is supported is formed on the insert (7).

10. Reciprocating saw according to Claim 9, **characterized in that** the locking element (9) is guided on the fastening flange (19).

## Revendications

1. Scie sauteuse comprenant une tige oscillante (2) animée d'un mouvement de va et vient entraînée par un moteur, qui porte à son extrémité libre (6) un dispositif de fixation (4) pour une lame de scie (5), la lame de scie (5) étant retenue de manière solidaire en rotation dans le dispositif de fixation (4), un élément de blocage (9) sollicité dans la direction de la lame de scie (5) par un ressort de réglage (16), déplaçable entre une position de libération et une position de fixation, étant prévu pour la fixation axiale de la lame de scie (5) dans le dispositif de fixation (4), et retenant la lame de scie (5) par engagement positif dans la position de fixation, et un dispositif de desserrage (10) étant prévu, avec lequel l'élément de blocage (9) peut être déplacé dans sa position de libération à l'encontre de la force de ressort du ressort de réglage (16), **caractérisée en ce qu'**un commutateur de desserrage (11) du dispositif de desserrage (10) est disposé du côté extérieur du boîtier (8) du dispositif de fixation (4) et le dispositif de desserrage (10) présente une bride de commutation (12) dans le boîtier (8), connectée au commutateur de desserrage (11), la bride de commutation (12) sollicitant l'élément de blocage (9) et le point de contact entre la bride de commutation (12) et l'élément de blocage (9) se trouvant à distance du plan de déplacement du commutateur de desserrage (11).

2. Scie sauteuse selon la revendication 1, **caractérisée en ce que** le commutateur de desserrage (11) du dispositif de desserrage (10) est intégré du côté extérieur en affleurement dans le boîtier (8).

3. Scie sauteuse selon la revendication 1 ou 2, **caractérisée en ce que** le commutateur de desserrage (11) est réalisé sous forme de commutateur à tiroir et est guidé de manière déplaçable dans une rainure de guidage (14) dans le boîtier (8).

4. Scie sauteuse selon l'une quelconque des revendications 1 à 3, **caractérisée en ce que** le commutateur de desserrage (11) et la bride de commutation (12) sont connectés l'un à l'autre par engagement positif.

5. Scie sauteuse selon l'une quelconque des revendications 1 à 4, **caractérisée en ce que** le dispositif de desserrage (10) est sollicité dans sa position fonctionnelle par un élément de ressort séparé (13).

6. Scie sauteuse selon la revendication 5, **caractérisée en ce que** l'élément de ressort (13) est réalisé sous forme de ressort à lame.

7. Scie sauteuse selon la revendication 5 ou 6, **caractérisée en ce que** l'élément de ressort (13) et le composant (12) sollicitant l'élément de blocage (9) du dispositif de desserrage (10) sont disposés sur des côtés opposés de la lame de scie (5).

8. Scie sauteuse selon l'une quelconque des revendications 1 à 7, **caractérisée en ce qu'**une pièce d'insertion (7) en forme de pince est fixée sur la tige oscillante (2), et forme un logement pour la lame de scie (5), l'élément de blocage (9) étant maintenu de manière réglable sur la pièce d'insertion (7).

9. Scie sauteuse selon la revendication 8, **caractérisée en ce qu'**une bride de fixation (19) est réalisée sur la pièce d'insertion (7), et supporte le ressort de réglage (16).

10. Scie sauteuse selon la revendication 9, **caractérisée en ce que** l'élément de blocage (9) est guidé sur la bride de fixation (19).
